# EUROPÄISCHE PATENTSCHRIFT

(11) **EP 1 847 169 B1**
(45) Veröffentlichungstag und Bekanntmachung des Hinweises auf die Patenterteilung: **16.03.2011**
(21) Anmeldenummer: 07101371.8
(22) Anmeldetag: 30.01.2007
(51) Int. Cl.: A01D 43/08, A01F 29/10

(54) **Verfahren und Vorrichtung zur Einstellung der Schnittlänge einer Häckseleinrichtung einer landwirtschaftlichen Erntemaschine**
Method and device for regulating the cutting length of a straw cutter in an agricultural harvester
Procédé et dispositif destinés au réglage de la longueur de coupe d'un dispositif de fourrage d'une moissonneuse agricole

(30) Priorität: 21.04.2006 DE 102006019243
(43) Veröffentlichungstag der Anmeldung: 24.10.2007
(73) Patentinhaber: CLAAS Selbstfahrende Erntemaschinen GmbH, 33428 Harsewinkel (DE)
(72) Erfinder: Diekhans, Norbert Dr., 33335 Gütersloh (DE)
(74) Vertreter: Ellerbrächter, Dirk

(56) Entgegenhaltungen:
- EP-A- 1 360 891
- EP-A- 1 454 519
- US-A- 3 945 175

## Beschreibung

Die vorliegende Erfindung betrifft ein Verfahren und eine Vorrichtung zur Einstellung der Schnittlänge einer Häckseleinrichtung einer landwirtschaftlichen Erntemaschine nach dem Oberbergriff der Ansprüche 1 und 8.

Bereits aus der DE 102 20 699 A1 ist eine Vorrichtung bekannt, die einen Sensor zur Erfassung von Häckselgutparametern vorsieht, wobei dann in Abhängigkeit von den gemessenen Parametern, insbesondere dem Feuchtgehalt des Erntegutes, die Schnittlänge der Häckseleinrichtung selbsttätig eingestellt wird. Nachteilig ist jedoch, dass die so gewählte Einstellung der Schnittlänge nicht zwangsläufig darauf schließen lässt, ob eine optimale Verdichtung des Erntegutes mit möglichst geringem Verdichtungsaufwand erreichbar ist. Dies offenbart sich dann erst im späteren Arbeitsprozess, beispielhaft während des Silageaufbaus im Fahr- oder Flachsilo.

Um jedoch einen guten Luftabschluss für die bei der Silage stattfindenden Gärprozesse zu erreichen, muss das von der Häckseleinrichtung gehäckselte Erntegut im Silo optimal verdichtet werden können. Die aufzubringende Verdichtungskraft ist dabei abhängig von der Komprimierbarkeit des gehäckselten Erntegutes, die wiederum von der Schnittlänge des Erntegutes abhängig ist. Wie bereits beschrieben, sind Mittel zur Schnittlängeneinstellung einer Häckseleinrichtung bekannt, die aber einen genauen Rückschluss auf die Verdichtbarkeit des Erntegutes nicht zulassen. Es wäre zwar denkbar, das Erntegut grundsätzlich so fein zu zerkleinern, dass sich selbst dann eine befriedigende Verdichtbarkeit ergibt, wenn das Material trocken ist. Eine solche Vorgehensweise ist aber zum einen unwirtschaftlich, weil Energie vergeudet wird, wenn feiner als nötig zerkleinert wird, zum anderen beeinträchtigt eine zu feine Zerkleinerung bei feuchtem Material dessen Handhabbarkeit.

Der vorliegenden Erfindung liegt daher die Aufgabe zugrunde, ein Verfahren und eine Vorrichtung zur Einstellung der Schnittlänge einer Häckseleinrichtung einer landwirtschaftlichen Erntemaschine vorzuschlagen, die die im Stand der Technik beschriebenen Nachteile vermeiden und in Abhängigkeit von der Verdichtbarkeit von Erntegut die Schnittlänge der Häckseleinrichtung so einstellen, dass dann ein optimaler und effizienter Verdichtungsprozess im Fahr- oder Flachsilo ermöglicht wird.

Erfindungsgemäß wird die Aufgabe durch die kennzeichnenden Merkmale der Ansprüche 1 und 8 gelöst.

Indem die Einstellung der Schnittlänge einer Häckseleinrichtung in Abhängigkeit von dem ermittelten Rückdehnungsverhalten des Erntegutes erfolgt, kann vorteilhaft aufgrund des festgestellten Rückdehnungsverhaltens die Einstellung der Schnittlänge der Häckseleinrichtung so gewählt werden, dass der spätere Verdichtungsprozess im Fahr- oder Flachsilo besonders effizient erfolgen und dennoch eine optimale Silagecfualität erreicht werden kann.

In einer vorteilhaften Ausgestaltung der Erfindung wird die Schnittlänge der Häckseleinrichtung umso kürzer eingestellt, je stärker das Rückdehnungsverhalten des verdichteten Erntegutes ausfällt und umgekehrt wird die Schnittlänge umso länger eingestellt, je geringer das Rückdehnungsverhalten des Erntegutes ausfällt, so dass die Wahl der Schnittlänge der Häckseleinrichtung in der Tendenz richtig getroffen ist, so dass der Bediener der landwirtschaftlichen Erntemaschine die optimale Schnittlänge nicht zeitintensiv selbst austesten muss.

Dadurch, dass das Rückdehnungsverhalten des verdichteten Erntegutes in Zeitabschnitten ermittelt und die Einstellung der Schnittlänge der Häckseleinrichtung an der jeweils ermittelten Intensität des Rückdehnungsverhaltens manuell vom Bediener oder automatisch mittels einer Steuer- und Auswerteeinheit angepasst wird, findet ein ständiger Abgleich zwischen der Schnittlänge des Erntegutes und des zum Verdichten des Erntegutes benötigten Verdichtungsaufwandes statt, so dass bei steigendem Verdichtungsaufwand umgehend eine Anpassung der Schnittlänge der Häckseleinrichtung erreicht werden kann.

Dadurch, dass die Ermittlung des Rückdehnungsverhaltens des verdichteten Erntegutes selbsttätig erfolgt, ist vorteilhaft zusätzlich eine weitere Automatisierung der Einstellung der Schnittlänge der Häckseleinrichtung bewirkbar.

Eine besonders praxistaugliche Ausgestaltung der Erfindung ergibt sich, wenn eine landwirtschaftliche Erntemaschine während des Ernteprozesses und/oder eine landwirtschaftliche Arbeitsmaschine während des Verdichtungsprozesses im Fahr- oder Flachsilo mittels wenigstens eines an ihr angeordneten Sensors das Rückdehnungsverhalten des Erntegutes ermittelt, wobei eine damit verbundene Steuer- und Auswerteeinheit ein Rückdehnungssignal ermittelt und anhand des Signals die Einstellung der Schnittlänge der Häckseleinrichtung erfolgt. Dadurch ist vom Ernteprozess bis zum Verdichtungsprozess des Erntegutes im Fahr- oder Flachsilo die optimale Einstellung der Schnittlänge der Häckseleinrichtung gewährleistet, die einen effizienten Verdichtungsprozess im Fahr- oder Flachsilo zulässt. Weiterhin werden vorteilhaft die notwendigen Kalibrierarbeiten des Bedieners der landwirtschaftlichen Erntemaschine am Einstellungssystem der Häckseleinrichtung auf ein Minimum reduziert.

In einer bevorzugten Ausführungsform der Erfindung wird das im Silo von der landwirtschaftlichen Arbeitsmaschine ermittelte Rückdehnungsverhalten online automatisch mittels Datenübertragungsnetz an die landwirtschaftliche Erntemaschine übermittelt, so dass selbst im Fall, dass die das Erntegut häckselnde landwirtschaftliche Erntemaschine keinen Sensor zur Ermittlung des Rückdehnungsverhaltens des Erntegutes vorsieht, dennoch durch den Online-Datenaustausch die optimale Einstellung der Schnittlänge der Häckseleinrichtung erfolgen kann und somit ein effizienter Einsatz der landwirtschaftlichen Erntemaschine beim Häckseln des Erntegutes wie auch der landwirtschaftlichen Arbeitsmaschine während des Verdichtungsprozesses im Fahr- oder Flachsilo gewährleistet ist.

Die Aufgabe der Erfindung wird ferner durch eine Einrichtung gelöst, die dadurch gekennzeichnet ist, dass die landwirtschaftliche Erntemaschine einen Sensor zur Ermittlung des Rückdehnungsverhaltens des Erntegutes umfasst, wobei eine Steuer- und Auswerteeinheit mit dem Sensor gekoppelt ist, welche anhand des Sensorsignals ein Rückdehnungssignal zur Einstellung der Schnittlänge der Häckseleinrichtung generiert. Durch diesen Sensor lässt sich vorteilhaft das Rückdehnungsverhalten des Erntegutes auf der landwirtschaftlichen Erntemaschine bestimmen und überwachen, anhand dessen dann die Einstellung der Schnittlänge der Häckseleinrichtung erfolgt.

In weiterer vorteilhafter Ausgestaltung der Erfindung entnimmt der Sensor eine Erntegutprobe aus dem die landwirtschaftliche Erntemaschine durchlaufenden Erntegutstrom, wobei er die Erntegutprobe definiert vorverdichtet und anschließend entlastet und wobei der Sensor ausgeführt ist, aus der Rückdehnung der Gutprobe von der verdichteten in die entlastete Position ein der Rückdehnung der Erntegutprobe proportionales Rückdehnungssignal zu generieren. Anhand dieses Ablaufes wird sichergestellt, dass unabhängig von den unterschiedlichen Fördereigenschaften der unterschiedlichen Erntegüter ein korrektes Rückdehnungssignal zur Einstellung der Schnittlänge der Häckseleinrichtung generiert wird.

Als besonders praxistauglich erweist sich die Erfindung, wenn der Sensor auf einer landwirtschaftlichen Erntemaschine als eine mit einer Erntegutprobe befüllbaren Verdichtungseinrichtung ausgeführt ist, so dass vorteilhaft unabhängig von der Menge oder der Durchsatzgeschwindigkeit des Erntegutes oder weiteren Störungsfaktoren das Rückdehnungsverhalten des Erntegutes ermittelt werden kann.

In einer weiteren vorteilhaften Ausgestaltung der Erfindung ist der Sensor an einer landwirtschaftlichen Arbeitsmaschine während des Sitageaufbaus im Fahr- oder Flachsilo vorgesehen, der zum Messen der Höhenänderung des im Fahr- oder Flachsilo verdichteten Erntegutes eingerichtet ist und eine damit verbundene Steuer- und Auswerteeinheit vorgesehen, die zum Auswerten des Sensorsignals zur Generierung eines Rückdehnungssignals sowie zum Einleiten von Maßnahmen zur Einstellung der Schnittlänge der Häckseleinrichtung der landwirtschaftlichen Erntemaschine eingerichtet ist, wenn das Rückdehnungssignal auf eine Veränderung in der Verdichtbarkeit des im Silo abgelegten Erntegutes schließen lässt. Dadurch kann auch im Fall, dass die landwirtschaftliche Erntemaschine keinen Sensor zur Ermittlung des Rückdehnungsverhaltens vorsieht, dennoch die optimale Einstellung der Schnittlänge der Häckseleinrichtung erfolgen, beispielhaft durch Übermittlung des generierten Rückdehnungssignals an die landwirtschaftliche Erntemaschine, damit dort geeignete Maßnahmen zur optimalen Einstellung der Schnittlänge der Häckseleinrichtung vornehmbar sind

Dadurch, dass der wenigstens eine Sensor die Höhenänderung von belastetem zu entlastetem Zustand des im Fahr- oder Flachsilo abgelegten Erntegutes sensiert und wobei der Sensor ausgeführt ist, aus der Differenz der Höhenänderung ein der Höhenänderung proportionales Rückdehnungssignal zu generieren, kann vorteilhaft im Fahr- oder Flachsilo auf technisch einfache Weise ein Rückdehnungssignal ermittelt und zur Einstellung der Schnittlänge der Häckseleinrichtung der landwirtschaftlichen Erntemaschine genutzt werden. Kostengünstig und daher vorteilhaft erweist es sich, den wenigstens einen Sensor als Ultraschallsensor auszuführen.

Eine vorteilhafte Weiterbildung des erfindungsgemäßen Verfahrens wird dann erreicht, wenn das Rückdehnungssignal in der Steuer- und Auswerteeinheit ein Häckseltrommeldrehzahlsignal generiert, wobei ein eine starke Rückdehnung repräsentierendes Rückdehnungssignal eine Erhöhung der Häckseltrommeldrehzahl bewirkt und wobei ein eine geringe Rückdehnung repräsentierendes Rückdehnungssignal eine Reduzierung der Häckseltrommeldrehzahl bewirkt, so dass tendenziell die richtige Schnittiängenwahl getroffen wird, ohne dass der Bediener der landwirtschaftlichen Emtmaschine es zeitintensiv selbst austesten muss.

Der gleiche vorteilhafte Effekt ist dann erzielbar, wenn das Rückdehnungssignal in der Steuer- und Auswerteeinheit ein Signal zur Regelung der Einzugs- und Vorpresswalzendrehzahl generiert, wobei ein eine starke Rückdehnung repräsentierendes Rückdehnungssignal eine Reduzierung der Einzugs- und Vorpresswalzendrehzahl bewirkt und wobei ein eine geringe Rückdehnung repräsentierendes Rückdehnungssignal eine Erhöhung der Einzugs- und Vorpresswalzendrehzahl bewirkt, so dass auch hier tendenziell die richtige Einstellung der Schnittlänge der Häckseleinrichtung erfolgt und der Bediener zeitgleich dadurch entlastet wird, indem die dafür notwendigen Kalibrierungsarbeiten entfallen.

Weitere vorteilhafte Ausgestaltungen der Erfindung sind Gegenstand weiterer Unteransprüche und werden nachfolgend anhand von Zeichnungen näher erläutert.

Es zeigen:
- Figur 1: das erfindungsgemäße Verfahren an einem frontseitigen Abschnitt eines Feldhäckslers in Seitenansicht,
- Figur 2: das erfindungsgemäße Verfahren an einer Häckseleinrichtung eines Feldhäcksler in einer detaillierten Längsschnittdarstellung
- Figur 3: das erfindungsgemäße Verfahren an einer landwirtschaftlichen Arbeitsmaschine während des Silageaufbaus in einem Flachsilo

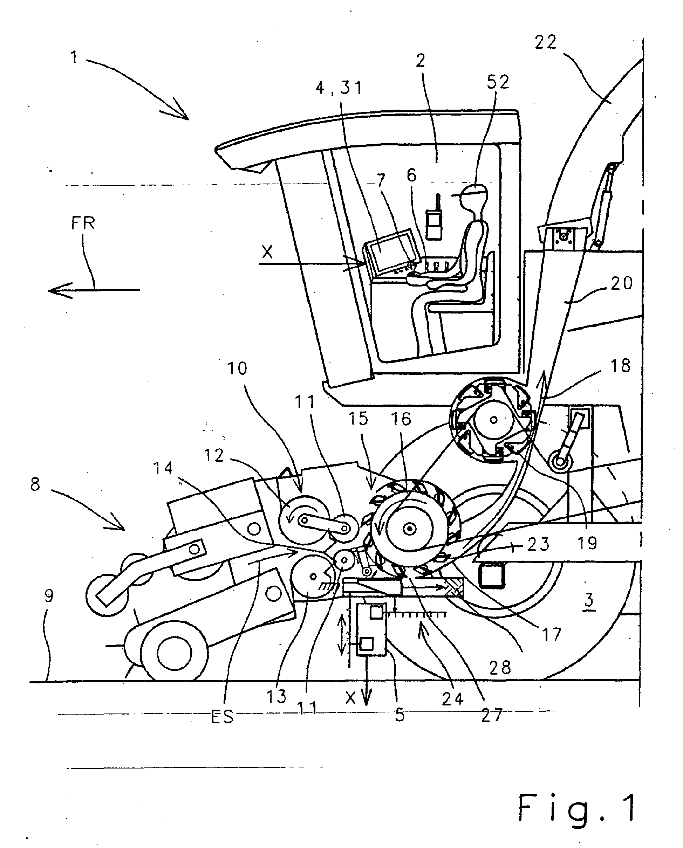

Figur 1 zeigt einen in Fahrtrichtung FR vorderen Teil einer als Feldhäcksler 1 ausgeführten landwirtschaftlichen Erntemaschine mit einer Fahrerkabine 2 und einem Antriebsreifen 3. In der Fahrerkabine 2 ist eine Anzeigeeinrichtung 4 und wenigstens eine Steuer- und Auswerteeinheit 5 sowie weitere Bedienelemente für den Betrieb des Feldhäckslers 1, wie Schalter 6 und der Fahrhebel 7, dargestellt. Der gezeigte Feldhäcksler 1 ist mit einem Vorsatzgerät 8 ausgerüstet, mittels welchem der Feldhäcksler 1 nicht dargestelltes Erntegut von dem Feldboden 9 aufnimmt und an das nachgeschaltete Einzugsaggregat 10, auf dessen Breite zusammengeführt, abgibt. Innerhalb des Einzugsaggregates 10 sind zwei angetriebene untere Einzugswalzen 11 und zwei angetriebene obere beweglich gelagerte Vorpresswalzen 12, 13 angeordnet. Das dem Einzugsaggregat 10 zugeführte Erntegut wird zwischen den Einzugswalzen 11 und den Vorpresswalzen 12, 13 durch die von wenigstens einer Feder 14 auf die Vorpresswalzen 12, 13 wirkenden Kraft vorverdichtet und an die nachfolgende Häckseleinrichtung 15 übergeben. Innerhalb der Häckseleinrichtung 15 häckselt die rotierende Häckseltrommel 16 das Erntegut und fördert es aktiv entlang des Trommelbodens 17 in Förderrichtung 18 zu einem Nachbeschleuniger 19. Das Erntegut wird dort nachbeschleunigt und durch den Austragschacht 20 sowie den nachgeordneten Auswurfkrümmer 22 in einen nicht dargestellten Transportbehälter überladen.

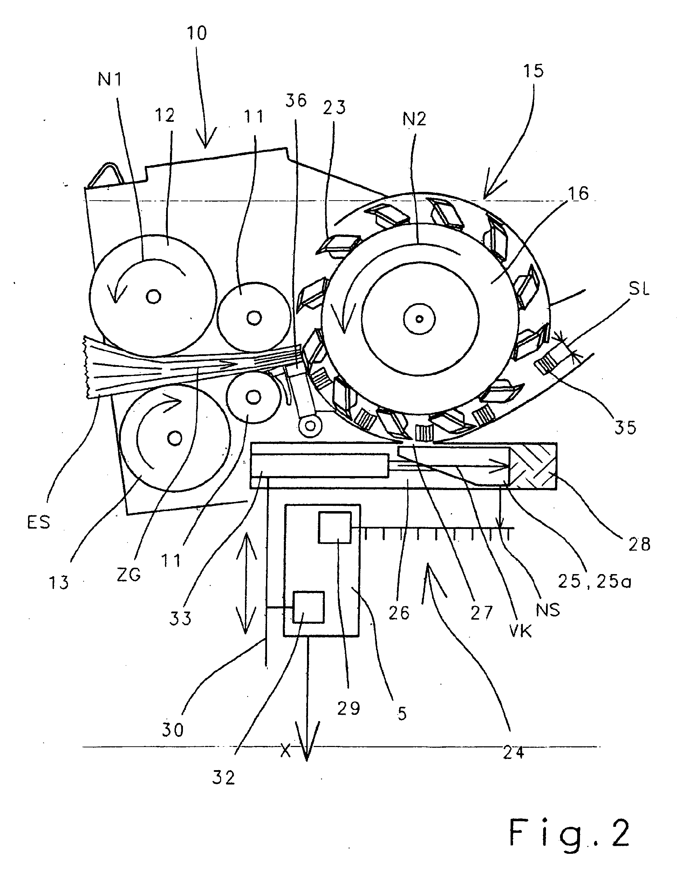

In noch näher zu beschreibender Weise ist die Schnittlänge SL (siehe Fig. 2) des Erntegutes über die Häckseleinrichtung 15 regelbar. Zunächst kann durch die Veränderung der Häckseltrommeldrehzahl N1 (siehe Fig. 2) bei konstanter Zuführgeschwindigkeit des Erntegutes eine Schnittlängenveränderung erreicht werden. Im weiteren kann eine Schnittlängenveränderung durch die Regelung der Einzugs- und Vorpresswalzendrehzahl N2 (siehe Fig. 2) erreicht werden. Zusätzlich ist die Einstellung der Schnittlänge SL der Häckseleinrichtung 15 von der Anzahl an der Häckseltrommel 16 befestigten Messer 23 abhängig, welche in der Regel während des Ernteprozesses nicht verändert wird.

Gemäß der vorliegenden Erfindung ist nun ein Verfahren zur Einstellung der Schnittlänge SL der Häckseleinrichtung 15 vorgesehen, das es ermöglicht jeweils die Schnittlänge SL der Häckseleinrichtung 15 so einzustellen, dass unter Berücksichtigung des Rückdehnungsverhaltens des Erntegutes, ein optimaler und effizienter Verdichtungsprozess im Fahr- oder Flachsilo erreicht werden kann und dadurch zusätzlich der Bediener von Kalibrierungsarbeiten bezüglich der optimalen Einstellung der Schnittlänge SL der Häckseleinrichtung 15 entlastet wird.

Zur Durchführung des Verfahrens befindet sich am Trommelboden 17 eine als Sensor ausgeführte Verdichtungseinrichtung 24. In Analogie zur DE 10 2006 009 575.8 auf deren Offenbarungsgehalt hier unmittelbar Bezug genommen wird und die mithin Bestandteil der Offenbarung dieser Erfindung werden soll, beinhaltet die Verdichtungsrichtung 24 ein als Verdichtungskolben 25 ausgeführtes Verdichtungselement 25a, welches in einer Probenkammer 26 beweglich angeordnet ist. Die Probenkammer 26 ist in Fahrtrichtung FR des Feldhäckslers 1, welche in etwa der Ausrichtung des Erntegutstroms ES entlang des Trommelbodens 17 entspricht, ausgerichtet, wobei die Förderrichtung 18 des Erntegutes entgegengesetzt der Fahrtrichtung FR ist. Die Verdichtungsund Bewegungsrichtung des Verdichtungskolbens 25 innerhalb der Probenkammer 26 entspricht bauartbedingt der Ausrichtung der Probenkammer 26. Der Trommelboden 17 ist gutumlenkend ausgebildet und beinhaltet eine Öffnung 27.

Entsprechend dem erfindungsgemäßen Verfahren entnimmt die als Sensor ausgeführte Verdichtungseinrichtung 24 eine Gutprobe 28 aus dem die landwirtschaftliche Erntemaschine durchlaufenden Erntegutstrom ES und führt sie der Probenkammer 26 zu, wo die Gutprobe 28 definiert vorverdichtet und anschließend entlastet wird. Ein Lagesensor 29 erstreckt sich über annähernd die gesamte Länge der Verdichtungseinrichtung 24, sodass dieser neben der Position des Verdichtungskolbens 25 zugleich die Ausdehnung der Gutprobe 28 im belasteten und unbelasteten Zustand ermitteln kann. In der mit dem Lagesensor 29 gekoppelten Steuer- und Auswerteeinheit 5 wird aus der Ausdehnung der Gutprobe 28 im belasteten und unbelasteten Zustand ein der Rückdehnung der Entegutprobe 28 proportionales Rückdehnungssignal X generiert, welches zugleich ein Maß für das die Verdichtungseigenschaft bildende Rückdehnungsverhalten ist. Während des Verdichtungsprozesses in der Verdichtungseinrichtung 24 kann die Steuer- und Auswerteeinheit 5 in an sich bekannter Weise die Lage des Verdichtungskolben 25 beziehungsweise das Volumen der Gutprobe 28, die Verdichtungskraft VK und das Rückdehnungsverhalten der Gutprobe 28 ständig ermitteln und in einer Speichereinrichtung 31 als Referenz-Messwert abspeichern.

Gemäß Fig. 1 ist die mit der Verdichtungseinrichtung 24 gekoppelte Steuer- und Auswerteeinheit 5 dazu eingerichtet, stufenlos die Einstellung der Schnittlänge SL der Häckseleinrichtung 15 zu steuern, einerseits durch eine Veränderung der Drehzahl N1 der Häckseltrammel 16 andererseits durch die Beeinflussung der Drehzahl N2 der Einzugs- und Vorpresswalzen 11, 12, 18. Die Steuer- und Auswerteeinheit 5 vergleicht das jeweils aktuell generierte Rückdehnungssignal X mit den in der Speichereinrichtung 31 hinterlegten Referenz-Messwerten, denen eine entsprechende Schnittlänge SL zugeordnet ist. Anhand dieses Vergleichs beeinflusst die Steuer- und Auswerteeinheit 5 in noch näher zu beschreibender Weise die Drehzahl N2 der Einzugs- und Vorpresswalzen '11, 12, 13 bzw. die Drehzahl N1 der Häckseltrommel 16, zur Einstellung der Schnittlänge SL der Häckseleinrichtung 15. Die Referenz-Messwerte für die Schnittlängeneinstellung können Resultate aus Testversuchen oder anderen entsprechend geeigneten Quellen entnommen sein.

Tendenziell stellt die Steuer- und Auswerteeinheit 5 die Schnittlänge SL der Häckseleinrichtung 15 umso kürzer ein, je stärker das Rückdehnungsverhalten der verdichteten Gutprobe 28 in der Probenkammer 26 ausfällt und umgekehrt stellt sie die Schnittlänge SL umso länger ein, je geringer das ermittelte Rückdehnungsverhalten der Gutprobe 28 ist, so dass das Erntegut tendenziell die richtige Schnittlänge SL aufweist, die dann im späteren Verdichtungsprozess im Fahr- oder Flachsilo einen effizienten Verdichtungsprozess und eine optimale Silagequalität erreichen lässt.

Erfindungsgemäß wird das Rückdehnungsverhalten in Zeitabständen ermittelt und die Einstellung der Schnittlänge SL der Häckseleinrichtung 15 an der jeweils ermittelten Intensität des Rückdehnungsverhaltens manuell vom Bediener oder automatisch mittels der Steuer- und Auswerteeinheit 5 angepasst, so dass ein ständiger Abgleich zwischen der Schnittlänge SL des Erntegutes und des zum Verdichten des Erntegutes benötigten Verdichtungsaufwandes stattfindet, wobei bei steigendem Verdiehtungsaufwand, umgehend eine Anpassung der Schnittlänge SL der Häckseleinrichtung 15 erfolgen kann. Bevorzugt erfolgt die Ermittlung des Rückdehnungsverhaltens des verdichteten Erntegutes automatisch, so dass zusätzlich eine weitere Automatisierung der Einstellung der Schnittlänge SL der Häckseleinrichtung 15 erreicht wird und die Kalibrierarbeiten des Bedieners der landwirtschaftlichen Erntemaschine am hier nicht dargestellten Einstellsystem der Häckseteinrichtung 15 auf ein Minimum reduziert werden können.

Figur 2 zeigt das eine Häckseleinrichtung 15 umfassende Einzugsaggregat 10 eines Feldhäckslers 1 in einer vergrößerten Längsschnittdarstellung. Nach dem Schnitt des Erntegutes 35 durch ein dem jeweiligen Erntegutverfahren entsprechendes hier nicht dargestelltes Erntevorsatzgerät eines Feldhäckslers 1 gelangt das zu häckselnde Erntegut 35 über mehrere Fördereinrichtungen zwischen jeweils zwei rotierenden Einzugs- und Vorpresswalzen 11, 12, 13 zu der ihrerseits rotierenden Häckseltrommel 16, wobei die Einzugs- und Vorpresswalzen 11, 12, 13 und die Häckseltrommel 16 über einen an sich bekannten und daher hier nicht dargestellten Antrieb angetrieben werden. Im Zusammenwirken mit einer feststehenden Gegenschneide 36 erfolgt durch die am Umfang der rotierenden Häckseltrommel 16 unter einem Schneidwinkei angebrachten Messer 23 der Häckselvorgang, wobei im Ausführungsbeispiel das geschnittene Erntegut 35 die vordefinierte Schnittlänge SL aufweist. Die Schnittlänge SL des abgeernteten Erntegutes 35 hängt dabei von der Drehzahl N2 der Einzugs- und Vorpresswalzen 11, 12,13 und von der Drehzahl N1 der Häckseltrommel 16 bzw. von der Anzahl der Messer 23 der Häckseltrommel 16, die während des Arbeitsprozesses in der Regel konstant bleibt, ab. Entsprechend dem erfindungsgemäßen Verfahren entnimmt die als Sensor ausgeführte Verdichtungseinrichtung 24 eine Gutprobe 28 aus dem die landwirtschaftliche Erntemaschine durchlaufenden Erntegutstrom ES und führt sie der Probenkammer 26 zu. Dabei umfasst die Verdichtungseinrichtung 24 einen Verdichtungskolben 25 und ein Verdichtungselement 25a. Die Bewegung des Verdichtungskolbens 25 innerhalb der Probenkammer 26 wird von einem gesteuerten Hubzylinder 33 ausgeführt, wobei der Hubzylinder 33 dem Verdichtungskolben 25 zugleich eine translatorische als auch rotatorische Bewegung aufprägen kann. Eine nicht näher gezeigte, dem Fachmann jedoch bekannte elektrohydraulische Steuereinrichtung bewirkt auf Befehl einer ebenfalls nicht näher dargestellten übergeordneten Probensteuerung, über die schematisch dargestellte hydraulische Ansteuerung 30, die Zuführung einer Ölmenge zu dem Hubzylinder 33 und führt hierdurch eine Bewegung des Verdichtungskolbens 25 in die gezeigte vordere Endlage herbei. Dabei wird der in der hydraulischen Ansteuerung 30 anstehende Druck durch einen Drucksensor 32 ermittelt. Anhand des sensierten Drucks, wird die in die Gutprobe 28 eingeleitete Verdichtungskraft VK dann repräsentativ für die definierte Vorverdichtung der Gutprobe 28 ermittelt. Die Stellung des Verdichtungskolbens 25 in der Probenkammer 26 wird durch ein Lagesensor 29 erfasst und von der Probensteuerung abgefragt. Der Lagesensor 39 erstreckt sich über annähernd die gesamte Länge der Verdichtungseinrichtung 24, sodass dieser neben der Position des Verdichtungskolbens 25 zugleich die Ausdehnung der Gutprobe 28 im belasteten und unbelasteten Zustand ermitteln kann. Der Verdichtungskolben 25 übt dabei die vordefinierte Verdichtungskraft VK auf die Gutprobe 28 aus, wobei die dann erreichte vordere Endlage als Nullstellung NS definiert ist. Nach Erreichen der vorderen Endlage, wird die Zuführung der Ölmenge zu dem Hubzylinder 33 unterbrochen und die Gutprobe 28 entlastet. Aufgrund des dem verdichteten Erntegut anhaftenden Rückdehnungspotentials wird der nun nicht mehr druckbeaufschlagte Verdichtungskolben 25 durch das Rückdehnungspotential des verdichteten Erntegutes in Richtung hintere Endlage verschoben. In einer dem Lagesensor 39 zugeordneten Steuer- und Auswerteeinheit 5 wird aus der Rückdehnung der Gutprobe 28 in Bezug auf die Nullstellung NS ein der Rückdehnung der Entegutprobe 28 proportionales Rückdehnungssignal X generiert, welches in erfindungsgemäßer Weise zugleich ein Maß für das die Verdichtungseigenschaft bildende Rückdehnungsverhalten ist und in einer Speichereinrichtung 31 als Referenz-Messwert abgespeichert werden kann. Alternativ kann das Rückdehnungsverhalten ermittelt werden, indem der Öldruck in der hydraulischen Ansteuerung 30 vermindert wird, wobei dann der Drucksensor den Rückdehnungsdruck des verdichteten Erntegutes sensiert und die damit verbundene Steuer- und Auswerteeinheit 5 daraus ein dem Rückdehnungsdruck proportionales Rückdehnungssignal X generiert. Dieses Rückdehnungssignal X vergleicht die Steuer-und Auswerteeinheit 5 mit in einer hier nicht näher dargestellten Speichereinrichtung hinterlegten Referenz-Messwerten, denen eine entsprechende Schnittlänge SL zugeordnet ist, die im späteren Verdichtungsprozess im Fahr- oder Flachsilo eine optimale Verdichtung des Erntegutes 35 und damit einen effizienten Verdichtungsprozess ermöglicht. Die dem jeweiligen Rückdehnungssignal X zugeordnete Schnittlänge SL resultiert aus Testversuchen oder anderen geeigneten Quellen. Im Falle, dass die aktuell eingestellte Schnittlänge SL nicht der Schnittlänge SL entspricht, die aufgrund des ermittelten Rückdehnungssignals X gewählt werden sollte, um einen effizienten Verdichtungsprozess im Fahr-oder Flachsilo zu erreichen, nimmt die Steuer- Auswerteeinheit 5 durch Ansteuerung des mit ihr gekoppelten Antriebs der Einzugs- und Vorpresswalzen 11, 12, 13 bzw. der Häckseltrommel 16 die entsprechende Anpassung der Schnittlänge SL der Häckseleinrichtung 15 vor. Einerseits kann die Anpassung der Schnittlänge SL durch Beeinflussung der Einzugs- und Vorpresswalzendrehzahl N2 erfolgen. Dabei ist durch die Veränderung der Einzugs- und Vorpresswalzendrehzahl N2 die Zuführgeschwindigkeit ZG des Erntegutes 35 zur Häckseltrommel 16 stufenlos regelbar, welches bei konstanter Häckseltrommeldrehzahl N1 eine Schnittlängenveränderung bewirkt. Eine erhöhte Drehzahl bewirkt unter sonst gleichbleibenden Bedingungen eine verlängerte Schnittlänge SL, dadurch, dass das Erntegut nun mit einer erhöhten Geschwindigkeit der Häckseltrommel 16 zugeführt wird und sich der Weg den das Erntegut innerhalb der konstanten Schneidintervalle der Messer 23 der Häckseltrommel 16 zurücklegt, erhöht. Eine Reduzierung der Einzugs- und Vorpresswalzendrehzahl N2 führt dann unter sonst gleichen Bedingungen zu einer Verkürzung der Schnittlänge SL des Erntegutes.

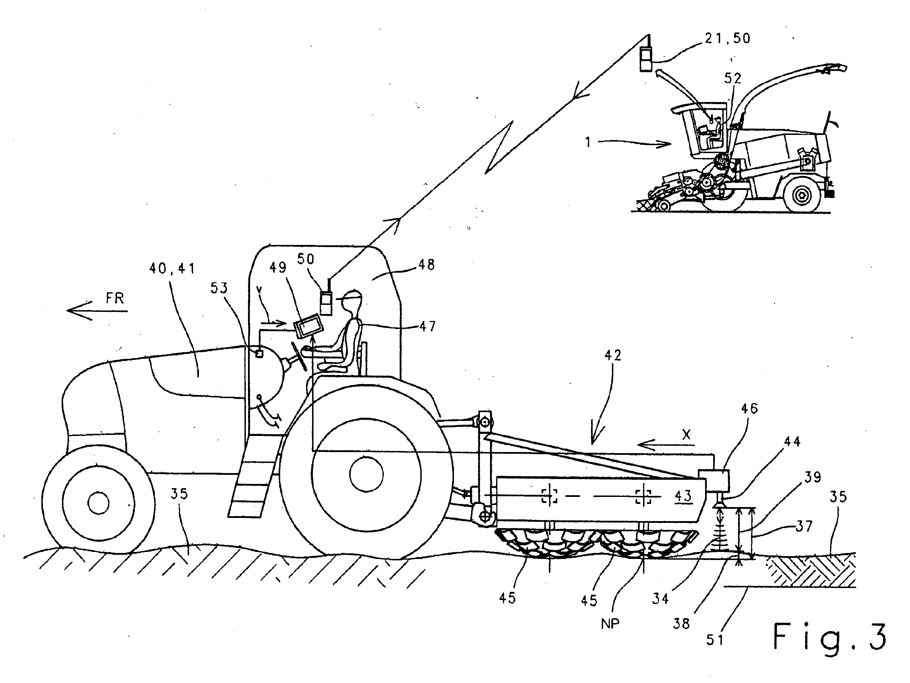

Andererseits steuert die Steuer- und Auswerteeinheit 5 die Anpassung der Schnittlänge SL der Häckseleinrichtung 15 über die Steuerung der Häckseltrommeldrehzahl N1. Dabei bewirkt die Reduzierung der Häckseltrommeldrehzahl N1 eine Verlängerung der Zeitintervalle zwischen den einzelnen Schnittpunkten der Messer 23 der Häckseltrommel 16, so dass die Schnittlänge SL der Häckseleinrichtung 15 verlängert wird. Im Gegensatz dazu bewirkt eine Erhöhung der Häckseltrommeldrehzahl N1 unter sonst konstanten Bedingungen eine Verkürzung der Erntegutschnitlänge SL. Auch diese Variante ermöglicht eine stufenlose Regelung der Schnittlänge SL der Häckseleinrichtung 15 bei konstanter Einzugs- und Vorpresswalzendrehzahl N2. Vorteilhaft wird bei der Ermittlung eines eine starke Rückdehnung repräsentierendes Rückdehnungssignals X eine Reduzierung der Einzugs- und Vorpresswalzendrehzahl N2 bzw. eine Erhöhung der Häckseltrommeldrehzahl N1 bewirkt und bei der Feststellung eines eine geringe Rückdehnung repräsentierendes Rückdehnungssignals X eine Erhöhung der Einzugs- und Vorpresswalzendrehzahl N2 bzw. eine Reduzierung der Häckseltrommeldrehzahl N1 bewirkt. Tendenziell wird dadurch die richtige Schnittlängenwahl getroffen, die einen effizienten Verdichtungsprozess im Fahr- oder Flachsilo zulässt, ohne dass der Bediener der landwirtschaftlichen Erntemaschine zeitintensiv die richtige Schnittlänge SL austesten muss.
Alternativ ist in Fig. 3 ein Sensor 44 an einer ein Fahr- oder Flachsilo befüllenden landwirtschaftlichen Arbeitsmaschine 40 angeordnet, um das Rückdehnungsverhalten des im Fahr- oder Flachsilo verdichteten Erntegutes 35 zu sensieren. Im Ausführungsbeispiel wird die landwirtschaftliche Arbeitsmaschine 40 von einem an sich bekannten Schlepper 41 und einer diesem heckseitig zugeordneten Verdichtungsvorrichtung 42 gebildet. Hinsichtlich der näheren Beschreibung und Funktion des Schleppers 41 und der Verdichtungsvorrichtung 42 wird wiederum auf die bereits oben genannte DE 10 2006 009 575.8 verwiesen, deren Lehre mit Verweis in diese Offenbarung integriert ist. Dabei ist der Sensor 44 heckseitig mittig am Tragrahmen 43 der Verdichtungsvorrichtung 42 angeordnet. Der Sensor 44 ist ein Abstandssensor, der einen nicht näher dargestellten Sender für Ultraschallstrahlung und einen entsprechenden Empfänger aufweist, wobei der Sender in Richtung Boden 51 bzw. abgelegtem Erntegut 35 strahlt und der Empfänger die vom Boden 51 bzw. Erntegut 35 reflektierte Ultraschallstrahlung empfängt. Der Sensor 44 sensiert dabei den Abstand zwischen dem Sensor 44 und dem Erntegut 35 nach dessen Verdichtung durch die Verdichtungsvorrichtung 42 im Flachsilo. Als Nullpunkt NP dient im Ausführungsbeispiel die Bodenseite eines der Verdichtungsvorrichtung 42 zugeordneten Verdichtungselementes 45. In der mit dem Sensor 44 gekoppelten Steuer-und Auswerteeinheit 46 wird aus dem Abstand des Sensors 44 zum Erntegut 35 im Verhältnis zum Nullabstand 37 ein der Rückdehnung 38 des Erntegutes 35 proportionales Rückdehnungssignal X generiert, wobei die auf das Signal einflussnehmende Fahrgeschwindigkeit V des Schleppers 41 mittels geeigneter Korrekturwerte korrigiert wird. Möglich ist auch, dass die landwirtschaftliche Arbeitsmaschine 40 nach einem Verdichtungsvorgang im Flachsilo für eine Zeitperiode stehen bleibt und am Ende dieser Zeitperiode mittels des angebrachten Sensors 44 aufgrund der sensierten Rückdehnung 38 über die Steuer- und Auswerteeinheit 46 ein entsprechendes Rückdehnungssignal X generiert wird. Denkbar ist auch den Sensor 44 an anderen Stellen an der Verdichtungsvorrichtung 42 oder an der landwirtschaftlichen Arbeitsmaschine 40 zu platzieren oder mehrere Sensoren einzusetzen. Anstelle des hier verwendeten Abstandssensors können auch andere an sich bekannte und zum Messen eines Abstandes geeignete Sensoren zum Einsatz kommen, wobei jedoch ein ausreichender Abstand vom Nullpunkt NP zum Sensor 44 vorhanden sein muss, damit für die Rückdehnung 38 des verdichteten Erntegutes 35 genügend Raum verbleibt. Vorteilhaft wird das Rückdehnungsverhalten des im Fahr- oder Flachsilo abgelegten Erntegutes 35 in Zeitabständen ermittelt, wodurch tendenziell fehlerhafte Sohnittlängeneinstellungen vermieden werden können. Diese können beispielhaft dadurch entstehen, dass das Erntegut 35 im Flachsilo nicht homogen verteilt wird und trotz des Verdichtungsvorgangs ausgeprägte Täler und Höhen verbleiben, wodurch z.T. nicht korrekte Rückdehnungssignale X generiert werden können. In der Steuer- und Auswerteeinheit 46 sind zum Vergleich Referenz-Messwerte mit jeweils zugeordneten Schnittlängen SL hinterlegt. Bevorzugt erfolgt die Ermittlung des Rückdehnungsverhattens des verdichteten Erntegutes 35 durch den Sensor 44 automatisch. Wird dabei beispielhaft ein erhöhtes Rückdehnungsverhalten festgestellt, welches wiederum darauf schließen lässt, dass ein erhöhter Verdichtungsaufwand zur Erreichung der optimalen Verdichtung des Erntegutes 35 im Silo notwendig ist, erhält der Bediener 47 der landwirtschaftlichen Arbeitsmaschine 40 einen entsprechenden Wamhinweis über die in der Fahrerkabine 48 vorhandenen Anzeigeeinrichtung 49, so dass er geeignete Maßnahmen einleiten kann. Denkbar ist nun, dass der Bediener 47 der landwirtschaftlichen Arbeitsmaschine 40 dem Bediener 52 der als Feldhäcksler 1 ausgeführten landwirtschaftlichen Erntemaschine über eine Telekommunikationseinrichtung 21, wie einem Funktelefon 50, mitteilen wird, dass zum optimalen und effizienten Verdichten des Erntegutes 35 eine kürzere Schnittlänge SL erforderlich ist, so dass der Bediener 52 der als Feldhäcksler 1 ausgeführten landwirtschaftlichen Erntemaschine die entsprechend notwendige Verkürzung der Schnittlänge SL der Häckseleinrichtung 15 über eine hier nicht dargestellte Einstellvorrichtung vornehmen kann. Denkbar ist zudem, um den Bediener 47 der landwirtschaftlichen Arbeitsmaschine 40 und den Bediener 52 des Feldhäckslers 1 zu entlasten, dass der soeben beschriebene Prozess von der Ermittlung des Rückdehnungsverhattens des Erntegutes 35 im Fahr- oder Flachsilo bis hin zum Einstellen der Schnittlänge SL der Häckseleinrichtung 15 der landwirtschaftlichen Erntemaschine über die jeweiligen Steuer- und Auswerteeinheiten 5, 46 automatisch über ein nicht näher beschriebenes Online-Datenübertragungsnetz selbsttätig erfolgt. Die Steuer- und Auswerteeinrichtungen 5, 46 sind jedoch dann so strukturiert, dass der Bediener 47 der landwirtschaftlichen Arbeitsmaschine 42 bzw. der Bediener 52 der landwirtschaftlichen Erntemaschine auch manuell in den Prozess eingreifen und so auf sich ändernde Bedingungen reagieren kann.

Es liegt im Rahmen des Könnens des Fachmanns die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste

- 1: Feldhäcksler
- 2: Fahrerkabine
- 3: Antriebsreifen
- 4: Anzeigeeinrichtung
- 5: Steuer- und Auswerteeinheit
- 6: Schalter
- 7: Fahrhebel
- 8: Vorsatzgerät
- 9: Feldboden
- 10: Einzugsaggregat
- 11: Einzugswalzen
- 12: Vorpresswalze
- 13: Vorpresswalze
- 14: Feder
- 15: Häckseleinrichtung
- 16: Häckseltrommel
- 17: Trommelboden
- 18: Förderrichtung
- 19: Nachbeschleuniger
- 20: Austragschacht
- 21: Telekommunikationsgerät
- 22: Auswurfkrümmer
- 23: Messer
- 24: Verdichtungseinrichtung
- 25: Verdichtungskolben
- 25 a: Verdichtungselement
- 26: Probenkammer
- 27: Öffnung
- 28: Gutprobe
- 29: Lagesensor
- 30: Hydraulische Ansteuerung
- 31: Speichereinrichtung
- 32: Drucksensor
- 33: Hubzylinder
- 35: Erntegut
- 36: Gegenschneide
- 37: Nullabstand
- 38: Rückdehnung
- 40: Landwirtschaftliche Arbeitsmaschine
- 41: Schlepper
- 42: Verdichtungsvorrichtung
- 43: Tragrahmen
- 44: Sensor
- 45: Verdichtungselement
- 46: Steuer- und Auswerteeinheit
- 47: Bediener
- 48: Fahrerkabine
- 49: Anzeigeeinrichtung
- 50: Funktelefon
- 51: Boden
- 52: Bediener
- NS: Nullstellung
- N1: Häckseltrommeldrehzahl
- N2: Einzugs- u. Vorpresswalzendrehzahl
- VK: Verdichtungskraft
- FR: Fahrtrichtung
- SL: Schnittlänge
- ES: Erntegutstrom
- X: Rückdehnungssignal
- NP: Nullpunkt
- ZG: Zuführgeschwindigkeit
- V: Fahrgeschwindigkeit

## Patentansprüche

1. Verfahren zur Einstellung der Schnittlänge (SL) einer Häckseleinrichtung (15) einer landwirtschaftlichen Erntemaschine,
**dadurch gekennzeichnet,**
**dass** die Einstellung der Schnittlänge (SL) der Häckseleinrichtung (15) in Abhängigkeit von dem ermittelten Rückdehnungsverhalten des Erntegutes (35) erfolgt.

2. Verfahren nach Anspruch 1,
**dadurch gekennzeichnet,**
**dass** eine umso kürzere Schnittlänge (SL) an der Häckseleinrichtung (15) eingestellt wird, je stärker das Rückdehnungsverhalten des verdichteten Erntegutes (35) ausfällt.

3. Verfahren nach einem der vorhergehenden Ansprüche,
**dadurch gekennzeichnet,**
**dass** eine umso längere Schnittlänge (SL) an der Häckseleinrichtung (15) eingestellt wird, je geringer das Rückdehnungsverhalten des verdichteten Erntegutes (35) ausfällt.

4. Verfahren nach einem der vorhergehenden Ansprüche,
**dadurch gekennzeichnet,**
**dass** das Rückdehnungsverhalten des verdichteten Erntegutes (35) in Zeitabschnitten ermittelt und die Einstellung der Schnittlänge (SL) der Häckseleinrichtung (15) unter Berücksichtigung der jeweils ermittelten Intensität des Rückdehnungsverhaltens manuell durch den Bediener (52) der landwirtschaftlichen Erntemaschine oder mittels einer Steuer- und Auswerteinheit (5) automatisch erfolgt.

5. Verfahren nach einem der vorhergehenden Ansprüche,
**dadurch gekennzeichnet,**
**dass** die Ermittlung des Rückdehnungsverhaltens des verdichteten Erntegutes (35) selbsttätig erfolgt.

6. Verfahren nach einem der vorhergehenden Ansprüche,
**dadurch gekennzeichnet,**
**dass** eine landwirtschaftliche Erntemaschine während des Ernteprozesses oder eine landwirtschaftliche Arbeitsmaschine (42) während des Verdichtungsprozesses im Fahr- oder Flachsilo mittels wenigstens eines an ihr angeordneten Sensors (44) das Rückdehnungsverhalten des Erntegutes (35) ermittelt, wobei mittels einer gekoppelten Steuer- und Auswerteeinheit (5, 46) anhand des ermittelten Sensorsignals die Einstellung der Schnittlänge (SL) der Häckseleinrichtung (15) erfolgt.

7. Verfahren nach einem der vorhergehenden Ansprüche,
**dadurch gekennzeichnet,**
**dass** das ermittelte Rückdehnungsverhalten online mittels Datenübertragungsnetz von der landwirtschaftlichen Arbeitsmaschine (42) auf die landwirtschaftliche Erntemaschine übertragen wird.

8. Einrichtung zur Einstellung der Schnittlänge (SL) einer Häckseleinrichtung (15) einer landwirtschaftlichen Erntemaschine mit wenigstens einer Einzugs- und einer Vorpresswalze (11, 12, 13) und einer Häckseltrommel (16),
**dadurch gekennzeichnet,**
**dass** die landwirtschaftliche Erntemaschine wenigstens einen Sensor zur Ermittlung des Rückdehnungsverhaltens des verdichteten Erntegutes (35) umfasst, wobei eine Steuer- und Auswerteeinheit (5) mit dem Sensor gekoppelt ist, welche anhand des Sensorsignals ein Rückdehnungssignal (X) zur Einstellung der Schnittlänge (SL) der Häckseleinrichtung (15) generiert.

9. Einrichtung nach Anspruch 8,
**dadurch gekennzeichnet,**
**dass** der Sensor eine Erntegutprobe (28) aus dem die landwirtschaftliche Erntemaschine durchlaufenden Erntegutstrom (ES) entnimmt, die Erntegutprobe (28) definiert vorverdichtet und anschließend entlastet und wobei der Sensor ausgeführt ist, aus der Rückdehnung der Erntegutprobe (28) von der verdichteten in die entlastete Position ein der Rückdehnung der Erntegutprobe (28) proportionales Rückdehnungssignal (X) zu generieren.

10. Einrichtung nach Anspruch 9,
**dadurch gekennzeichnet,**
**dass** der wenigstens eine Sensor auf der landwirtschaftlichen Erntemaschine als eine mit einer Erntegutprobe (28) befüllbaren Verdichtungseinrichtung (24) ausgeführt ist.

11. Einrichtung nach einem der Ansprüche 8,
**dadurch gekennzeichnet,**
**dass** an einer landwirtschaftlichen Arbeitsmaschine (42) wenigstens ein Sensor (44) vorgesehen ist, der zur Ermittlung des Rückdehnungsverhaltens von im Fahr- oder Flachsilo verdichtetem Erntegut (35) eingerichtet ist und eine Steuer- und Auswerteeinheit (46) vorgesehen ist, die zum Auswerten des Signals des Sensors (44) sowie zum Einleiten von Maßnahmen zur Einstellung der Schnittlänge (SL) der Häckseleinrichtung (15) der landwirtschaftlichen Erntemaschine eingerichtet ist, wenn das durch die Steuer- und Auswerteeinheit (46) generierte Rückdehnungssignal X auf eine Veränderung in der Verdichtbarkeit des im Fahr- oder Flachsilo abgelegten Erntegutes (35) schließen lässt.

12. Einrichtung nach Anspruch 11,
**dadurch gekennzeichnet,**
**dass** der wenigstens eine Sensor (44) die Höhenänderung von belastetem zu entlastetem Zustand des im Fahr- oder Flachsilo abgelegten Erntegutes (35) sensiert und wobei der Sensor (44) ausgeführt ist, aus der Differenz der Höhenänderung ein der Höhenänderung proportionales Rückdehnungssignal X zu generieren.

13. Einrichtung nach Anspruch 11 und 12,
**dadurch gekennzeichnet,**
**dass** der wenigstens eine Sensor (44) als Abstandssensor ausgeführt ist.

14. Einrichtung nach einem der Ansprüche 8 bis 13,
**dadurch gekennzeichnet,**
**dass** das Rückdehnungssignal (X) in der Steuer- und Auswerteeinheit (5, 46) ein Signal zur Beeinflussung der Drehzahl der Häckseltrommel (16) generiert und wobei ein eine starke Rückdehnung repräsentierendes Rückdehnungssignal (X) eine Erhöhung der Häckseltrommeldrehzahl (N1) bewirkt und wobei ein eine geringe Rückdehnung repräsentierendes Rückdehnungssignal (X) eine Reduzierung der Häckseltrommeldrehzahl (N1) bewirkt.

15. Einrichtung nach einem der Ansprüche 8 bis 13,
**dadurch gekennzeichnet,**
**dass** das Rückdehnungssignal (X) in der Steuer- und Auswerteeinheit (5, 46) ein Signal zur Beeinflussung der Einzugs- und Vorpresswalzendrehzahl (N2) generiert und wobei ein eine starke Rückdehnung repräsentierendes Rückdehnungssignal eine Reduzierung der Einzugs- und Vorpresswalzendrehzahl (N2) bewirkt und wobei ein eine geringe Rückdehnung repräsentierendes Rückdehnungssignal (X) eine Erhöhung der Einzugs- und Vorpresswalzendrehzahl (N2) bewirkt.

16. Einrichtung nach einem der Ansprüche 8 bis 13,
**dadurch gekennzeichnet,**
**dass** die landwirtschaftliche Erntemaschine als Feldhäcksler (1) und die landwirtschaftliche Arbeitsmaschine (40) als Schlepper (41) ausgeführt ist.

## Claims

1. A method of adjusting the cutting length (SL) of a chopping device (15) of an agricultural harvesting machine,
**characterised in that**
adjustment of the cutting length (SL) of the chopping device (15) is effected in dependence on the determined rebound behaviour of the crop material (35).

2. A method according to claim 1 **characterised in that** the cutting length (SL) adjusted at the chopping device (15) is correspondingly shorter, the more vigorous the rebound behaviour of the compressed crop material (35) turns out to be.

3. A method according to one of the preceding claims **characterised in that** the cutting length (SL) adjusted at the chopping device (15) is correspondingly longer, the less vigorous the rebound behaviour of the compressed crop material (35) turns out to be.

4. A method according to one of the preceding claims **characterised in that** the rebound behaviour of the compressed crop material (35) is determined in time intervals and adjustment of the cutting length (SL) of the chopping device (15) is effected having regard to the respectively determined intensity of the rebound behaviour manually by the operator (52) of the agricultural harvesting machine or automatically by means of a control and evaluation unit (5).

5. A method according to one of the preceding claims **characterised in that** the operation of determining the rebound behaviour of the compressed crop material (35) is effected automatically.

6. A method according to one of the preceding claims **characterised in that** an agricultural harvesting machine during the harvesting process or an agricultural working machine (42) during the compression process in a travelling or horizontal silo determines the rebound behaviour of the crop material (35) by means of at least one sensor (44) arranged thereon, wherein adjustment of the cutting length (SL) of the chopping device (15) is effected by means of a coupled control and evaluation unit (5, 46) on the basis of the determined sensor signal.

7. A method according to one of the preceding claims **characterised in that** the determined rebound behaviour is transmitted on-line by means of a data transmission network from the agricultural working machine (42) to the agricultural harvesting machine.

8. Apparatus for adjusting the cutting length (SL) of a chopping device (15) of an agricultural harvesting machine having at least one intake and a pre-pressing roller (11, 12, 13) and a chopping drum (16),
**characterised in that**
the agricultural harvesting machine has at least one sensor for determining the rebound behaviour of the compressed crop material (35), wherein a control and evaluation unit (5) is coupled to the sensor, the control and evaluation unit generating a rebound signal (X) on the basis of the sensor signal for adjusting the cutting length (SL) of the chopping device (15).

9. Apparatus according to claim 8 **characterised in that** the sensor takes a crop material sample (28) from the crop material flow (ES) passing through the agricultural harvesting machine, the crop material sample (28) is definedly pre-compressed and then relieved, and wherein the sensor is adapted to generate a rebound signal (X) proportional to the rebound of the crop material sample (28) from the rebound of the crop material sample (28) from the compressed into the relieved position.

10. Apparatus according to claim 9 **characterised in that** the at least one sensor on the agricultural harvesting machine is in the form of a compressing device (24) which can be filled with a crop material sample (28).

11. Apparatus according to one of claims 8 **characterised in that** provided on an agricultural harvesting machine (42) is at least one sensor (44) which is adapted to determine the rebound behaviour of crop material (35) compressed in the travelling or horizontal silo, and there is provided a control and evaluation unit (46) which is adapted to evaluate the signal of the sensor (44) and to initiate measures for adjusting the cutting length (SL) of the chopping device (15) of the agricultural harvesting machine when the rebound signal (X) generated by the control and evaluation unit (46) indicates a change in the compressibility of the crop material (35) deposited in the travelling or horizontal silo.

12. Apparatus according to claim 11 **characterised in that** the at least one sensor (44) senses the change in height from the loaded to the unloaded condition of the crop material (35) deposited in the travelling or horizontal silo and wherein the sensor (44) is adapted to generate a rebound signal (X) proportional to the change in height from the difference in the change in height.

13. Apparatus according to claim 11 and claim 12 **characterised in that** the at least one sensor (44) is in the form of a distance sensor.

14. Apparatus according to one of claims 8 to 13 **characterised in that** the rebound signal (X) generates in the control and evaluation unit (5, 46) a signal for influencing the rotary speed of the chopping drum (16) and wherein a rebound signal (X) representing a strong rebound causes an increase in the chopping drum rotary speed (N1) and wherein a rebound signal (X) representing a slight rebound causes a reduction in the chopping drum rotary speed (N1).

15. Apparatus according to one of claims 8 to 13 **characterised in that** the rebound signal (X) generates in the control and evaluation unit (5, 46) a signal for influencing the intake and pre-pressing roller rotary speed (N2) and wherein a rebound signal representing a strong rebound causes a reduction in the intake and pre-pressing roller rotary speed (N2) and wherein a rebound signal (X) representing a slight rebound causes an increase in the intake and pre-pressing roller rotary speed (N2).

16. Apparatus according to one of claims 8 to 13 **characterised in that** the agricultural harvesting machine is in the form of a forage harvester (1) and the agricultural working machine (40) is in the form of a tractor (41).

## Revendications

1. Procédé pour le réglage de la longueur de coupe (SL) d'un dispositif de hachage (15) d'une moissonneuse agricole,
**caractérisé en ce que** :
le réglage de la longueur de coupe (SL) du dispositif de hachage (15) s'effectue en fonction du comportement de récupération élastique déterminé du produit récolté (35).

2. Procédé selon la revendication 1,
**caractérisé en ce que** :
une longueur de coupe (SL) est réglée sur le dispositif de hachage (15) d'autant plus courte que le comportement de récupération élastique du produit récolté (35) compacté est plus fort.

3. Procédé selon l'une quelconque des revendications précédentes,
**caractérisé en ce** :
une longueur de coupe (SL) est réglée sur le dispositif de hachage (15) d'autant plus longue que le comportement de récupération élastique du produit récolté (35) comprimé est plus faible.

4. Procédé selon l'une quelconque des revendications précédentes,
**caractérisé en ce que** :
le comportement de récupération élastique du produit récolté (35) compacté est déterminé à des intervalles de temps et le réglage de la longueur de coupe (SL) du dispositif de hachage (15) s'effectue en tenant compte de l'intensité respectivement déterminée du comportement de récupération élastique manuellement par l'opérateur (52) de la moissonneuse agricole ou de façon automatique au moyen d'un dispositif de commande et d'analyse (5).

5. Procédé selon l'une quelconque des revendications précédentes,
**caractérisé en ce que** :
le calcul du comportement de récupération élastique du produit récolté (35) compacté s'effectue automatiquement.

6. Procédé selon l'une quelconque des revendications précédentes,
**caractérisé en ce que** :
une moissonneuse agricole ou une machine de travail (42) agricole détermine le comportement de récupération élastique du produit récolté (35) respectivement pendant le processus de récolte et le processus de compactage dans le silo roulant ou le silo-couloir au moyen d'au moins un capteur (44) disposé sur la machine, le réglage de la longueur de coupe (SL) du dispositif de hachage (15) s'effectuant au moyen d'une unité de commande et d'analyse (5, 46) couplée à l'aide du signal de capteur déterminé.

7. Procédé selon l'une quelconque des revendications précédentes,
**caractérisé en ce que** :
le comportement de récupération élastique déterminé est transmis en ligne au moyen d'un réseau de transmission de données de la machine de travail (42) agricole à la moissonneuse agricole.

8. Dispositif destiné au réglage de la longueur de coupe (SL) d'un dispositif de hachage (15) d'une moissonneuse agricole doté d'au moins un rouleau d'alimentation ainsi que d'un rouleau de pré-pressage (11, 12, 13) et d'un tambour hachage (16)
**caractérisé en ce que** :
la moissonneuse agricole comporte au moins un capteur pour déterminer le comportement de récupération élastique du produit récolté (35) compacté, une unité de commande et d'analyse (5) étant couplée au capteur, laquelle génère à l'aide du signal de capteur un signal de récupération élastique (X) pour le réglage de la longueur de coupe (SL) du dispositif de hachage (15).

9. Dispositif selon la revendication 8,
**caractérisé en ce que** :
le capteur prélève un échantillon de produit récolté (28) sur le flux de produit récolté (ES) passant dans la moissonneuse agricole, l'échantillon de produit récolté (28) étant précompacté de façon définie et détendu ensuite et le capteur étant conçu pour générer un signal de récupération élastique (X) proportionnel à la récupération élastique du produit récolté (28) à partir de la récupération élastique du produit récolté (28) de la position compactée à la position détendue.

10. Dispositif selon la revendication 9,
**caractérisé en ce que** :
le au moins un capteur est conçu sur la moissonneuse agricole sous la forme d'un dispositif de compactage (24) qui peut être rempli avec un échantillon de produit récolté (28).

11. Dispositif selon la revendication 8,
**caractérisé en ce que** :
il est prévu sur une machine de travail (42) agricole au moins un capteur (44) qui est agencé pour déterminer le comportement de récupération élastique du produit récolté (35) compacté dans le silo roulant ou le silo-couloir et une unité de commande et d'analyse (46) qui est agencée pour analyser le signal du capteur (44) et pour mettre en oeuvre des mesures pour régler la longueur de coupe (SL) du dispositif de hachage (15) de la moissonneuse agricole lorsque le signal de récupération élastique X généré par l'unité de commande et d'analyse (46) permet de conclure à une modification de la compactabilité du produit récolté (35) déposé dans le silo roulant ou le silo-couloir.

12. Dispositif selon la revendication 11,
**caractérisé en ce que** :
le au moins un capteur (44) détecte la variation en hauteur de l'état chargé à l'état déchargé du produit récolté (35) déposé dans le silo roulant ou le silo-couloir, le capteur (44) étant conçu pour générer un signal de récupération élastique X proportionnel à la variation en hauteur à partir de la différence de variation en hauteur.

13. Dispositif selon les revendications 11 et 12,
**caractérisé en ce que** :
le au moins un capteur (44) est conçu sous la forme d'un capteur de distance.

14. Dispositif selon l'une quelconque des revendications 8 à 13, **caractérisé en ce que** :
le signal de récupération élastique (X) génère dans l'unité de commande et d'analyse (5, 46) un signal pour influencer le régime du tambour de hachage (16) et un signal de récupération élastique (X) représentant une forte récupération élastique entraînant une élévation du régime du tambour hachage (N1) et un signal de récupération élastique (X) représentant une faible récupération élastique entraînant une réduction du régime du tambour de hachage (N1).

15. Dispositif selon l'une quelconque des revendications 8 à 13, **caractérisé en ce que** :
le signal de récupération élastique (X) génère dans l'unité de commande et d'analyse (5, 46) un signal pour influencer le régime des rouleaux d'alimentation et de pré-pressage (N2) et un signal de récupération élastique représentant une forte récupération élastique entraînant une réduction du régime des rouleaux d'alimentation et de pré-pressage (N2) et un signal de récupération élastique (X) représentant une faible récupération élastique entraînant une élévation du régime des rouleaux d'alimentation et de pré-pressage (N2).

16. Dispositif selon l'une quelconque des revendications 8 à 13, **caractérisé en ce que** :
la moissonneuse agricole est conçue sous la forme d'une ramasseuse-hacheuse (1) et la machine de travail (40) agricole sous la forme d'un tracteur (41).
